Europäisches Patentamt

European Patent Office

Office européen des brevets

(11) Veröffentlichungsnummer: **0 457 124 A1**

# (12) EUROPÄISCHE PATENTANMELDUNG

(21) Anmeldenummer: 91107171.0

(22) Anmeldetag: 03.05.91

(51) Int. Cl.⁵: **A01D 45/02, A01B 63/08**

(30) Priorität: 12.05.90 DE 4015326

(43) Veröffentlichungstag der Anmeldung:
**21.11.91 Patentblatt 91/47**

(84) Benannte Vertragsstaaten:
**BE DE DK FR GB IT**

(71) Anmelder: **DEERE & COMPANY**
**1 John Deere Road**
**Moline, Illinois 61265(US)**

(72) Erfinder: **Dannigkeit, Helmut**
**Lerchenstrasse 6**
**W-6661 Battweiler(DE)**

(74) Vertreter: **Feldmann, Bernhard et al**
**DEERE & COMPANY European Office Patent**
**Department Steubenstrasse 36-42**
**W-6800 Mannheim 1(DE)**

(54) Hub- und Senkvorrichtung für ein Gerät.

(57)
2.1. An fahrbaren landwirtschaftlichen Maschinen (10) sind Hub- und Senkvorrichtungen (16) vorgesehen, um Geräte (14), die an einem höhenverstellbaren Teil (12) schwenkbar angreifen, aus einer Arbeits- in eine Transportstellung zu bringen, wenn der Teil (12) selbst angehoben wird. Hierzu werden bisher in aufwendiger Weise Hydraulikaggregate verwendet, oder es bleibt einer Bedienungsperson überlassen, das oft schwere Gerät (14) in die Transportstellung anzuheben.

2.2 Es wird vorgeschlagen, das Gerät (14) mittels eines Gestänges (38) anzuheben, das sowohl an einem Rahmen (18) als auch an dem Gerät (14) angreift und seitlich ausgelenkt wird, sobald sich der Teil (12) anhebt.

2.3. Die Hub- und Senkvorrichtung (16) findet insbesondere bei fahrbaren Erntemaschinen Verwendung.

EP 0 457 124 A1

Die Erfindung betrifft eine Hub- und Senkvorrichtung für ein Gerät zum Anbau an eine fahrbare landwirtschaftliche Maschine mit einem höhenverstellbaren Teil und einem Rahmen, wobei das Gerät auch gegenüber dem Teil höhenbeweglich angelenkt und mittels eines einenends an dem Gerät an einer Anlenkstelle und anderenends an dem Rahmen an einer Anlenkstelle angreifenden Gestänges in eine obere Stellung bringbar und dort festlegbar ist.

Es ist bei landwirtschaftlichen Maschinen, insbesondere bei Erntemaschinen, bekannt, zur Bearbeitung des Bodens und/oder von Früchten gleichzeitig zwei Geräte einzusetzen, die in eine Arbeits- und eine Transportstellung bringbar sind. Beispiele hierfür sind ein Packer an einem Pflug, eine Egge hinter einer Sämaschine und ein Unterfluhrhäcksler unter einem Maispflücker. Für den Transport werden üblicherweise beide Geräte gemeinsam angehoben, wobei allerdings eine zuvor gegebene Beweglichkeit zwischen beiden Geräten erhalten bleibt.

So wird bei einer Erntemaschine mit einem Maispflücker gemäß der DE-C-25 27 645 ein an letzterem pendelnd aufgehängter Unterfluhrhäcksler mittels einer Kette gegen eine allzu große Pendelbewegung geschützt. Zum anderen ist ein Hydraulikzylinder einenends an dem Rahmen der Erntemaschine und anderenends mittels eines Seils an dem Unterfluhrhäcksler angeschlossen, um diesen in eine Transportstellung anzuheben, wenn auch der Maispflücker angehoben wird.

Diese zum Festlegen des Unterfluhrhäckslers benutzte Vorrichtung, bestehend aus dem Hydraulikzylinder und dem Seil, ist sehr aufwendig, zumal für den Hydraulikzylinder auch eine Steuervorrichtung erforderlich ist.

Ferner ist es aus der DE-A-37 27 535 bekannt, einen in gleicher Weise pendelnd an einem Lager und mit einer Feder aufgehängten Unterfluhrhäcksler mittels einer Klinke an dem Maispflücker bzw. dem mit ihm verbundenen Schrägförderer in einer oberen Stellung festzulegen, die scheinbar abhängig von der Stellung des Maispflückers den Unterfluhrhäcksler auch wieder freigibt.

Bei dieser Ausführung muß der Unterfluhrhäcksler scheinbar per Hand in die Stellung gebracht werden, in der er mit der Klinke festgelegt werden kann; ist der Unterfluhrhäcksler hingegen in der Transportstellung nicht arretiert, schwingt er infolge der Verbindung mit der Feder beim Überfahren von unebenem Boden auf und ab, was zur Vermeidung von Beschädigungen und Schwingungen unterbleiben sollte.

Die der Erfindung zugrunde liegende Aufgabe wird darin gesehen, eine Hub- und Senkvorrichtung für ein Gerät zu entwickeln, mit deren Hilfe das Gerät auf einfache Weise und ohne großen Aufwand beim Anheben eines z. B. von einer Erntebergungsvorrichtung gebildeten Teils einer fahrbaren landwirtschaftlichen Maschine in eine Transportstellung gebracht wird.

Diese Aufgabe ist erfindungsgemäß durch die Merkmale des Patentanspruchs 1 gelöst worden, wobei in den davon abhängigen Patentansprüchen vorteilhafte Weiterentwicklungen angegeben sind.

Auf diese Weise wird das Gerät abhängig von der Stellung des Teils gegenüber dem Rahmen angehoben, und bei entsprechender Länge und Anordnung des Gestänges nimmt es seine oberste Stellung ein, wenn auch der Teil ganz angehoben ist. Befindet sich der Teil, also z. B. eine Erntebergungsvorrichtung, in einer Transportstellung, wird mittels der Erfindung ein größtmöglicher Bodenfreiraum erreicht. Es bedarf keines zusätzlichen Tätigwerdens einer Bedienungsperson und keines zusätzlichen Hydraulikzylinders, um das Gerät in die gewünschte Stellung zu bringen. Aber auch dann, wenn der Teil nicht ganz angehoben wird, kann die Erfindung von Vorteil sein. Nimmt man nämlich an, daß die Maschine auf unbefestigtem Boden fährt und in diesen nicht unwesentlich einsinkt, so daß der Teil angehoben werden muß, dann wird auch das Gerät geringfügig angehoben und gräbt sich nicht in den Boden ein. Hierdurch können die zur Vorwärtsbewegung der Maschine erforderlichen Kräfte wesentlich reduziert und eine eventuelle Unterbrechung des Erntevorgangs verhindert werden.

In einer sehr kostengünstigen Ausführung wird das Gestänge von einem Seil, z. B. einem Stahlseil, gebildet, das einenends an dem Rahmen der Maschine befestigt ist, über eine an dem Teil, insbesondere einer Erntebergungsvorrichtung oder einem damit verbundenen Schrägförderer, angebrachte Umlenkvorrichtung, z. B. eine Umlenkrolle, geführt und anderenends an dem schwenkbaren Gerät befestigt ist. Da die Länge des Gestänges konstant ist und sich die Umlenkvorrichtung beim Anheben des Teils von dem Rahmen, d. h. der Befestigungsstelle des Gestänges einenends wegbewegt, wird das Gerät zu der Umlenkvorrichtung hingezogen.

Eine kostengünstige Alternative zu dem Seil wäre ein Profilmetallstab, z. B. ein sog. Flacheisen, der über einen schwenkbaren Winkelhebel auf das Gerät wirkt, wobei jedoch auch eine Kombination der beiden Gestängearten möglich ist. Eine solche Kombination ist dann von Nutzen, wenn räumliche Gegebenheiten die Verwendung eines Seils oder eines Profilmetallstabs nicht zulassen.

Wenn die Länge des Gestänges insgesamt oder auf zumindest einer Seite der Umlenkvorrichtung veränderlich ist, kann der Zeitpunkt, wann und das Maß, um das das Gerät angehoben wird, verändert und an Arbeits- oder Transportbedingungen angepaßt werden.

Wird zwischen dem Gestänge und dem Gerät oder dem Rahmen ein Totgangbereich vorgesehen, führt nicht bereits jede, und sei es auch nur eine geringe, Relativbewegung zu einer Vertikalverstellung des Geräts. Ein derartiges "Dämpfungsglied" ist dann dienlich, wenn aufgrund der Arbeitsbedingungen der Teil stets geringfügig in der Höhe verstellt werden muß, die Lage des Geräts dadurch aber noch nicht verändert werden soll. Der Totgangbereich kann durch eine Bolzen-Langloch-Verbindung oder ein Seil mit einer Überlänge erreicht werden.

Enthält das Gestänge ein elastisches Zwischenglied, wirken sich aus der Fahrt auf unebenem Boden herrührende Impulskräfte nicht unmittelbar auf das Gestänge und den Rahmen aus, sondern werden um die Zerstörungsenergie, z. B. der einer Schraubenfeder, eines Stoßdämpfers oder dergl. vermindert.

Eine sehr nützliche Anwendung der erfindungsgemäßen Vorrichtung findet sich bei Erntemaschinen, insbesondere Mähdreschern oder Feldhäckslern, mit einer Erntebergungsvorrichtung und einem daran vertikal schwenkbar angebrachten Unterfluhrhäcksler, der gegenüber der Erntebergungsvorrichtung mittels des erfindungsgemäßen Gestänges verstellbar ist.

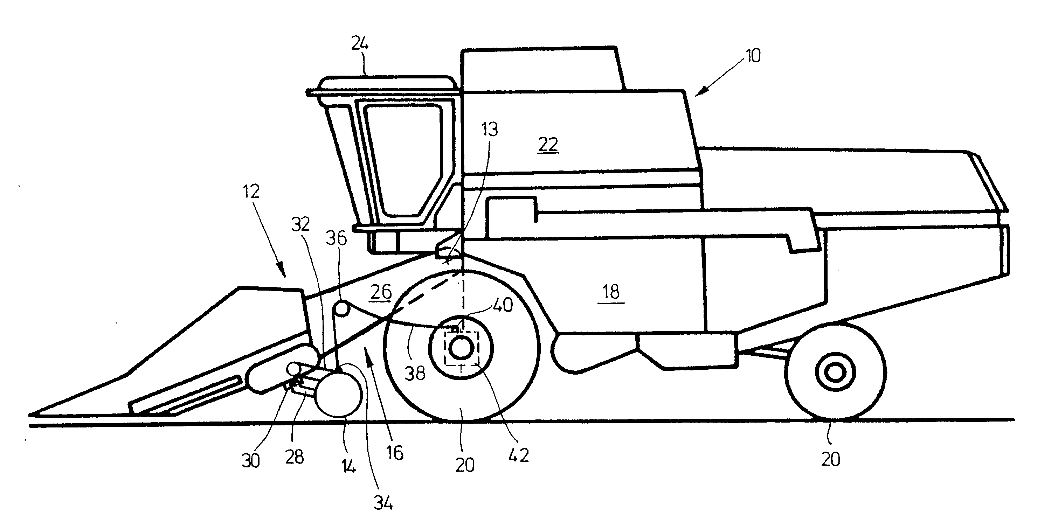

In der einzigen Figur der Zeichnung ist ein nachfolgend näher beschriebenes Ausführungsbeispiel der Erfindung dargestellt.

Eine fahrbare landwirtschaftliche Maschine 10 ist an ihrem frontseitigen Ende mit einem Teil 12 versehen, an dessen unteren Bereich ein Gerät 14 ebenfalls vertikal schwenkbar angebracht ist, wobei die Stellung des Geräts 14 gegenüber dem Teil 12 mittels einer erfindungsgemäßen Hub- und Senkvorrichtung 16 eingestellt wird.

Die Maschine 10 ist in der Art eines Mähdreschers ausgebildet und enthält demnach als wesentliche Bestandteile einen Rahmen 18, der von einem Gehäuse gebildet und auf Rädern 20 getragen wird, einen Korntank 22 und eine Fahrerkabine 24 zum Schutz einer Bedienungsperson. Anstatt eines Mähdreschers könnte die Maschine auch als Feldhäcksler, als Baumwollpflücker, als Zuckerrohrerntemaschine, als Pflanz- oder Sägerät oder dergleichen ausgebildet sein.

Der Teil 12 nimmt die Bauart eines Maispflückers ein, der einen Schrägförderer 26 enthält oder zumindest mit einem solchen verbindbar ist und mit diesem an dem Rahmen 18 in der Höhe um ein Schwenkzentrum 13 schwenkbar angreift. Der Teil 12 kann für einen Erntevorgang, wie es in der Zeichnung dargestellt ist, ganz oder auch nur teilweise abgesenkt werden. Für Transportzwecke wird der Teil 12 vollkommen angehoben, so daß sich der Schrägförderer 26 im wesentlichen in einer horizontalen Ebene erstreckt. Der Teil 12 könnte auch als Maispflücker an einem Feldhäcksler angebaut sein, oder eine Pflück- bzw. Pflanz- oder Säeinheit für eine der vorgenannten Maschinen sein.

Das Gerät 14 wird in diesem Ausführungsbeispiel von einem Unterfluhrhäcksler gebildet, der dazu dient, von dem als Maispflücker ausgebildeten Teil abgegebene Stengel zu zerkleinern. Mit einem derartigen Häcksler könnten auch Stengel von Baumwoll-, Sorghum- oder Sonnenblumenpflanzen bei der Verwendung mit anderen Maschinen 10 zerstört werden.

Es könnte sich bei dem Gerät 14 auch um ein Bodenbearbeitungsgerät, wie dies eingangs erwähnt wurde, handeln. Das Gerät 14 erstreckt sich in diesem Fall über die gesamte Breite des Teils 12 und ist über einen Hebel 28 an einem Lager 30 an der Unterseite des Teils 12 schwenkbar angelenkt. Zum Antrieb des Geräts 14 ist ein Riemengetriebe 32 vorgesehen. Auf der Oberseite des Geräts 14 befindet sich eine Anlenkstelle 34, deren Sinn später erläutert wird. Aus der Zeichnung ist ersichtlich, daß sich bei abgesenktem Teil 12 das Gerät 14 ebenfalls in unmittelbarer Bodennähe befindet; es kann aber im Bedarfsfall, z. B. beim Auftreffen auf ein Hindernis, nach oben ausweichen.

Die Hub- und Senkvorrichtung 16 wird gebildet von einer Umlenkvorrichtung 36 und einem Gestänge 38 und befindet sich bei dem Ausführungsbeispiel auf der linken Seite des Schrägförderers 26.

Die Umlenkvorrichtung 36 ist an der linken Seitenwand des Schrägförderers 26 in einer vertikalen Ebene als Umlenkrolle drehbar angebracht.

Das Gestänge 38 ist als Seil ausgebildet und greift einenends an der Anlenkstelle 34 auf der Oberseite des Geräts 14 an, während es anderenends fest mit einer Anlenkstelle 40 an dem Rahmen 18 verbunden ist. Die Anlenkstelle 40 befindet sich vorzugsweise im Bereich einer die vorderen Räder 20 aufnehmenden Tragachse 42. Zwischen den beiden Anlenkstellen 34, 40 verläuft das Gestänge 38 über die Umlenkvorrichtung 36 - im vorliegenden Fall ist das Seil über die Umlenkrolle geführt.

Die Umlenkvorrichtung 36 weist zu den Anlenkstellen 34, 40 jeweils unterschiedliche Abstände auf. Die Anlenkstellen 34 und 40 beschreiben mit der Umlenkvorrichtung 36 ein ungleichschenkliges Dreieck, dessen Hypotenuse sich als gedachte Gerade zwischen den beiden Anlenkstellen 34, 40 erstreckt. Da das Schwenkzentrum 13 des Teils 12 nicht mit der Anlenkstelle 40 des Gestänges 38 am Rahmen zusammenfällt, ändern sich alle Seitenlängen des vorgenannten Dreiecks bei einem Schwenkvorgang des Teils 12.

Wird jedoch der Teil 12 und mit diesem der Schrägförderer 26 mit der Umlenkvorrichtung 36 angehoben, wird der Abstand von der Umlenkvorrichtung 36 zu der Anlenkstelle 34 kürzer und zu der Anlenkstelle 40 länger. Da das Gestänge 38 in seiner Länge gleich bleibt, führt dies dazu, daß das Gerät 14 mit seinem Hebel 28 um das Lager 30 schwenkt und an die Unterseite des Schrägförderers 26 um so mehr herangezogen wird, als sich der Teil 12 nach oben bewegt. Umgekehrt bewegt sich das Gerät 14 von dem Schrägförderer 26 und dem Teil 12 wieder weg, wenn diese abgesenkt werden.

Die Zeichnung zeigt ferner, daß das Gestänge 38 bei der gegebenen Stellung des Geräts 14 entspannt ist, d. h., daß das Seil durchhängt. Demnach müßte der Teil 12 zunächst um einen bestimmten Weg angehoben werden, bevor sich das Gestänge 38 spannt und das Gerät 14 anheben kann.

Wäre das Gestänge 38 als ein Profilmetallstab ausgebildet, würde die Umlenkrolle durch einen Winkelhebel ersetzt werden. Dementsprechend würde sich zwischen dem einen Arm des Winkelhebels und der Anlenkstelle 34 ein Stück Profilmetallstab oder ein Stück Seil und zwischen dem anderen Arm des Winkelhebels und der Anlenkstelle 40 ein anderes Stück Profilmetallstab oder Seil erstrecken, wobei die sich ändernden Abstände durch das Schwenkvermögen des Winkelhebels ausgeglichen würden. Der Profilmetallstab, der aus einem Rundoder Flacheisen, genauso aber auch aus Aluminium gebildet sein kann, könnte mit einem Langloch versehen werden, das von einem an dem Rahmen oder an dem Gerät angebrachten Bolzen durchdrungen wird, um ein Anheben des Geräts 14 erst dann vorzunehmen, wenn der Leerweg des Bolzens innerhalb des Langlochs überschritten ist.

Zur Änderung der Länge des Gestänges, d. h. des Profilmetallstabs und/oder des Seils könnten Spannzangen oder dergleichen verwendet werden.

## Patentansprüche

1. Hub- und Senkvorrichtung (16) für ein Gerät (14) zum Anbau an eine fahrbare landwirtschaftliche Maschine (10) mit einem höhenverstellbaren Teil (12) und einem Rahmen (18), wobei das Gerät (14) auch gegenüber dem Teil (12) höhenbeweglich angelenkt und mittels eines einenends an dem Gerät (14) an einer Anlenkstelle (34) und anderenends an dem Rahmen (18) an einer Anlenkstelle (40) angreifenden Gestänges (38) in eine obere Stellung bringbar und dort festlegbar ist, dadurch gekennzeichnet, daß das Gestänge (38) über eine an dem Teil (12) angebrachte Umlenkvorrichtung (36) geführt ist, deren Lage so gewählt ist, daß sie sich von einer die Anlenkstellen (40, 34) schneidenden, gedachten Geraden seitlich wegbewegt, wenn der Teil (12) in der Höhe bewegt wird.

2. Hub- und Senkvorrichtung nach Patentanspruch 1, dadurch gekennzeichnet, daß das Gestänge (38) als Seil und die Umlenkvorrichtung (36) als Umlenkrolle ausgebildet sind.

3. Hub- und Senkvorrichtung nach Patentanspruch 1, dadurch gekennzeichnet, daß das Gestänge (38) als Seil oder Profilmetallstab und die Umlenkvorrichtung (36) als Winkelhebel ausgebildet sind.

4. Hub- und Senkvorrichtung nach Patentanspruch 3, dadurch gekennzeichnet, daß das Gestänge (38) einerseits des Winkelhebels als Seil und andererseits als Profilmetallstab ausgebildet ist.

5. Hub- und Senkvorrichtung nach einem oder mehreren der vorherigen Patentansprüche, dadurch gekennzeichnet, daß die Länge des Gestänges (38) insgesamt oder auf zumindest einer Seite der Umlenkvorrichtung (36) veränderlich ist.

6. Hub- und Senkvorrichtung nach einem oder mehreren der vorherigen Patentansprüche, dadurch gekennzeichnet, daß das Gestänge (38) einen Totgangbereich gegenüber dem Gerät (14) aufweist und so ausgebildet bzw. angeordnet ist, daß es das Gerät (14) erst ab einer vorbestimmbaren relativen Stellung des Teils (12) gegenüber anhebt.

7. Hub- und Senkvorrichtung nach Patentanspruch 6, dadurch gekennzeichnet, daß der Totgangbereich durch ein Langloch in dem Profilmetallstab und einen an dem Gerät (14) und/oder dem Rahmen (18) angebrachten und in dem Langloch geführten Bolzen gebildet wird.

8. Hub- und Senkvorrichtung nach Patentanspruch 6, dadurch gekennzeichnet, daß das Seil um die Größe des Totgangbereichs verlängert ist.

9. Hub- und Senkvorrichtung nach einem oder mehreren der vorherigen Patentansprüche, dadurch gekennzeichnet, daß das Gestänge (38) ein elastisches Zwischenglied enthält.

10. Erntemaschine (10), insbesondere Mähdrescher oder Feldhäcksler, mit einer Erntebergungsvorrichtung (12) und einem daran vertikal schwenkbar angebrachten Unterfluhrhäcksler (14), der gegenüber der Erntebergungsvorrichtung (12) mittels einer Hub- und Senkvorrichtung (16) nach einem oder mehreren der vorherigen Patentansprüche verstellbar ist.

**Europäisches Patentamt**

**EUROPÄISCHER RECHERCHENBERICHT**

Nummer der Anmeldung

**EP 91 10 7171**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | FR-A-2 418 621   (BISO BITTER GMBH & CO. KG) <br> * das ganze Dokument * <br> — — — | 1,2,10,5, 6,8,9 | A 01 D 45/02 <br> A 01 B 63/08 |
| Y,D | FR-A-2 275 983   (INTERNATIONAL HARVESTER FRANCE) <br> * Seite 2, Zeile 31 - Seite 3, Zeile 28; Figuren 1, 2 & DE-C-2527645 * <br> — — — | 5,6,8,9 | |
| A | DE-A-3 515 295   (CLAAS OHG) <br> * Spalte 2, Zeilen 4 - 21; Figur 1 * <br> — — — | 1,10 | |
| A,D | DE-A-3 727 535   (BISO BITTER GMBH & CO. KG) <br> * Figur 1 * <br> — — — — — | 1,10 | |

| RECHERCHIERTE SACHGEBIETE (Int. Cl.5) |
|---|
| A 01 B <br> A 01 D |

Der vorliegende Recherchenbericht wurde für alle Patentansprüche erstellt

| Recherchenort | Abschlußdatum der Recherche | Prüfer |
|---|---|---|
| Berlin | 25 Juli 91 | MERCKX A M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument